# EUROPÄISCHE PATENTSCHRIFT

(11) **EP 2 142 421 B1**
(45) Veröffentlichungstag und Bekanntmachung des Hinweises auf die Patenterteilung: **29.12.2010**
(21) Anmeldenummer: 08758399.3
(22) Anmeldetag: 07.05.2008
(51) Int. Cl.: B62D 33/06, E02F 9/16

(54) **BAUMASCHINE**
CONSTRUCTION MACHINE
ENGIN DE CONSTRUCTION

(30) Priorität: 07.05.2007 DE 202007006500 U
(43) Veröffentlichungstag der Anmeldung: 13.01.2010
(73) Patentinhaber: Liebherr-Hydraulikbagger GmbH, 88457 Kirchdorf (DE)
(72) Erfinder: ANSORGE, Dieter, 88430 Rot a.d. Rot (DE)
(74) Vertreter: Laufhütte, Dieter
(86) Internationale Anmeldenummer: PCT/EP2008/003665
(87) Internationale Veröffentlichungsnummer: WO 2008/135284

(56) Entgegenhaltungen:
- WO-A-2007/010808
- JP-A- 2000 234 352
- JP-A- 2007 069 724
- JP-A- 2007 069 807
- US-A1- 2003 111 281

## Beschreibung

Die vorliegende Erfindung betrifft eine Baumaschine mit einer Fahrerkabine, deren verstärkt ausgeführte Kabinenstruktur dem Schutz des Fahrers dient, wobei die Fahrerkabine über eine Bodenplatte an einem maschinenseitigen Fahrerstandsrahmen gelagert ist. Dokument JP 2002 034 352 beschreibt eine solche Baumaschine.

Aufgrund von strenger werdenden Sicherheitsvorschriften wird es zunehmend nötig, Baumaschinen wie z. B. Hydraulikbagger mit einem Überrollschutz auszustatten. Zweckmäßigerweise wird dieser Überrollschutz dabei in die Kabinenstruktur integriert, welche hierdurch verstärkt ausgeführt ist. Eine solche Kabine mit integriertem Überrollschutz wird dabei üblicherweise elastisch auf dem Fahrerstandsrahmen gelagert, um sie gegenüber Schwingungen abzukoppeln, und über Sicherungselemente gegen ein Abreißen bei einer übermäßigen Belastung, wie sie z. B. bei einem Unfall bzw. einem Umkippen des Baufahrzeuges auftritt, gesichert. Insbesondere muß ein solcher Überrollschutz eines Hydraulikbaggers den ROPS-Anforderungen genügen, was im Stand der Technik nur durch sehr massiv ausgeführte und damit sperrige und teure Einzelkomponenten erreicht werden kann. Aufgabe der vorliegenden Erfindung ist es daher, eine Baumaschine mit integriertem Überrollschutz zur Verfügung zu stellen, durch welche der Maschinenbediener optimal geschützt wird und bei welcher dennoch eine wirtschaftliche Lösung zum Einsatz kommt.

Erfindungsgemäß wird diese Aufgabe von einer Baumaschine gemäß Anspruch 1 gelöst. Bei der erfindungsgemäßen Baumaschine ist die Steifigkeit der Kabinenstruktur zumindest bezüglich eines seitlichen Kraftangriffes größer als die der Bodenplatte und/oder des Fahrerstandsrahmens, so dass sich bei einem Lastfall zunächst die Bodenplatte und/oder der Fahrerstandsrahmen verformen. Fahrerkabine, Bodenplatte und Fahrerstandsrahmen bilden hierdurch ein integriertes Gesamtsystems zum Schutz des Maschinenführers bei einem Unfall. Hierbei wird im Falle eines Unfalls das komplette System zur Kraftaufnahme verwendet wird und schützt den Fahrer. Durch die erfindungsgemäße Einstellung der Steifigkeiten der einzelnen Bauteile wird dabei sichergestellt, dass zunächst die Bodenplatte und/oder der Fahrerstandsrahmen über ihre Verformung Energie vernichten und erst daraufhin die Kabinenstruktur nennenswert verformt wird. Damit werden alle Einzelteile der ROPS-Struktur so belastet, dass ein wirtschaftliches Gesamtsystem ermöglicht wird. Insbesondere nehmen so alle beteiligten Bauteile nur soviel Energie auf, wie notwendig ist, wobei dennoch eine erforderliche Mindestkraft in das System eingeleitet werden kann. Durch die Steifigkeit der Kabinenstruktur ist dabei weiterhin sichergestellt, dass der nach ISO 10262-2 definierte Überlebensraum für den Maschinenbediener erhalten bleibt und über die Bodenplatte und/oder den Fahrerstandsrahmen dennoch ausreichend Energie vernichtet wird, um den Maschinenbediener zu schützen.

Vorteilhafterweise verformt sich die Kabinenstruktur bei einem seitlichen Kraftangriff dabei erst dann nennenswert, wenn die Fahrerkabine am Ausleger und/oder am Oberwagen der Baumaschine anliegt. Hierdurch wird sicher gestellt, dass zunächst so viel Energie wie möglich in den Fahrerstandsrahmen eingeleitet wird, ohne dass die Fahrerkabine nennenswert verformt würde. Hierzu ist die Anordnung des Fahrerstandsrahmens so gewählt, dass der Abstand zwischen der Fahrerkabine und der danebenliegenden Ausrüstung wie z. B. ein Ausleger oder dem Oberwagen der Baumaschine so auf die Steifigkeit von Fahrerstandsrahmen und Fahrerkabine abgestimmt ist, dass zunächst die gesamte über die Verformung des Fahrerstandsrahmens ableitbare Energie vernichtet wird. Die Kabinenstruktur bleibt hierdurch so lange wie möglich intakt und schützt so den Maschinenbediener optimal. Der Fahrerstandsrahmen ist dabei für den Normalbetrieb ausreichend steif ausgelegt. Dabei ist es unerheblich, ob der Rahmen am Oberwagen angeschraubt oder angeschweißt ist.

Weiterhin vorteilhafterweise ist bei der erfindungsgemäßen Baumaschine die der Baumaschine zugewandte Seite der Kabinenstruktur so ausgelegt, dass bei einem Kontakt mit der Ausrüstung und/oder dem Oberwagen der Baumaschine ein Steifigkeitssprung auftritt. Hierdurch kann durch die Verformung insbesondere der rechten Säulen der Kabinenstruktur ausreichend Energie vernichtet werden, was einen zusätzlichen Schutz für den Bediener bedeutet. Hierbei wird die maximal mögliche Verformung der Kabine genutzt, allerdings erst, wenn ein Maximum an Energie durch den Fahrerstandsrahmen aufgenommen wurde und die Kabine bereits an der Baumaschine anliegt. Gleichzeitig wird sichergestellt, dass ein ausreichender Überlebensraum für den Bediener erhalten bleibt.

Weiterhin weisen der Fahrerstandsrahmen und die Kabinenstruktur oder Bodenplatte Kraftübertragungselemente auf, welche im Normalfall nicht miteinander in Kontakt stehen und im Lastfall in Kontakt kommen, um Kraft von der Kabinenstruktur auf den Fahrerstandsrahmen zu übertragen. Im Normalbetrieb kann so eine effektive Schwingungsentkopplung zwischen Fahrerstandsrahmen und Kabinenstruktur gewährleistet werden, während die Kraftübertragungselemente im Falle eines Unfalls dafür sorgen, die auf die Kabinenstruktur einwirkenden Kräfte optimal auf den Fahrerstandsrahmen zu übertragen.

Vorteilhafterweise sind dabei die Kraftübertragungselemente an der der Baumaschine abgewandten Seite des Fahrerstandsrahmens und der Kabinenstruktur oder Grundplatte angeordnet. So werden die bei einem Unfall auftretenden Kräfte, welche üblicherweise von der der Baumaschine abgewandten Seite aus an die Fahrerkabine angreifen, optimal auf den Fahrerstandsrahmen abgeleitet.

Weiterhin vorteilhafterweise bestehen die Kraftübertragungselemente aus einem starren Stift, welcher in eine starre Öffnung eingreift. Hierdurch ergibt sich eine besonders einfache und kostengünstige Möglichkeit der Kraftübertragung. Die Größe der Öffnung im Vergleich zur Größe des starren Stifts bestimmt dabei das Spiel der Kraftübertragungselemente im Normalbetrieb, bzw. die Stärke der Kräfte, welche nötig sind, damit die Kraftübertragungselemente aneinander angreifen.

Weiterhin vorteilhafterweise ist die Bodenplatte der Fahrerkabine erfindungsgemäß über Dämpfungselemente am Fahrerstandsrahmen gelagert. Diese weisen üblicherweise ein elastisches Element auf und sorgen schwingungstechnisch für eine Entkopplung zwischen Fahrerkabine und Baumaschine.

Vorteilhafterweise weisen die erfindungsgemäßen Dämpfungselemente Ausreißsicherungen auf. Diese Ausreißsicherungen sorgen dafür, dass im Falle einer Überlast die Dämpfungselemente nicht beschädigt werden und nicht über ihren maximal zulässigen Verformungsweg hinaus belastet werden.

Vorteilhafterweise kommen dabei die erfindungsgemäßen Kraftübertragungselemente im Lastfall erst dann miteinander in Kontakt, wenn der Verformungsweg mindestens eines Dämpfungselements aufgebraucht ist. Hierdurch wird sichergestellt, dass zunächst erst die ohnehin vorhandenen Dämpfungselemente zur Energievernichtung eingesetzt werden, bevor Kräfte direkt von der Kabinenstruktur auf den Fahrerstandsrahmen übergeleitet werden.

Weiterhin vorteilhafterweise ist die Steifigkeit der erfindungsgemäßen Kabinenstruktur zumindest bezüglich eines seitlichen Kraftangriffes so ausgelegt, dass eine nennenswerte Verformung der Kabinenstruktur erst auftritt, wenn der Verformungsweg mindestens eines Dämpfungselements aufgebraucht ist. Hierdurch wird wiederum sichergestellt, dass die Fahrerkabine erst dann verformt wird, wenn keine Energieaufnahme durch das Dämpfungselement mehr möglich ist.

Weiterhin vorteilhafterweise ist die Steifigkeit der Kabinenstruktur im hinteren Bereich höher als im vorderen Bereich. Hierdurch können im vorderen Bereich durch die Verwendung relativ schlanker Bauteile gute Sichtverhältnisse gewährleistet werden, während die Sicherheit durch die erhöhte Steifigkeit im hinteren Bereich gewährleistet wird.

Vorteilhafterweise wird bei der erfindungsgemäßen Baumaschine die Steifigkeit der Kabinenstruktur weiterhin über ein extern angefügtes Versteifungselement erhöht. Hierdurch ist es möglich, höhere Maschinengewichte abzudecken, ohne in die Kabinenstruktur eingreifen zu müssen.

Vorteilhafterweise ist das Versteifungselement dabei im hinteren Bereich der Kabinenstruktur angeordnet. Die Energieaufnahme konzentriert sich so auf die hinteren Säulen des angefügten Bauteils, während eine ausreichende Steifigkeit im angefügten Bauteil auch ohne Säulen im vorderen Bereich erreicht wird.

Die vorliegende Erfindung wird nun anhand eines Ausführungsbeispiels und Zeichnungen näher erläutert.

Dabei zeigen
- Figur 1: eine perspektivische Ansicht der erfindungsgemäßen Sicherheitsstruktur,
- Figur 2: eine Seitenansicht der erfindungsgemäßen Baumaschine mit der erfin- dungsgemäßen Sicherheitsstruktur,
- Figur 3: eine Draufsicht der erfindungsgemäßen Baumaschine mit dem erfin- dungsgemäßen Fahrerstandsrahmen,
- Figur 4: eine perspektivische Ansicht der erfindungsgemäßen Baumaschine mit dem erfindungsgemäßen Fahrerstandsrahmen,
- Figur 5: eine Frontalansicht der erfindungsgemäßen Fahrerkabine,
- Figur 6: eine Seitenansicht der erfindungsgemäßen Fahrerkabine,
- Figur 7: eine Schnittansicht entlang einer Längsachse des erfindungsge- mäßen Fahrerstandsrahmens mit Bodenplatte,
- Figur 8: eine Schnittansicht entlang einer Querachse des erfindungsgemä- ßen Fahrerstandsrahmen mit Bodenplatte,
- Figur 9a: ein erstes Ausführungsbeispiel der erfindungsgemäßen Kraftüber- tragungselemente, und
- Figur 9b: ein zweites Ausführungsbeispiel der erfindungsgemäßen Kraftüber- tragungselemente.

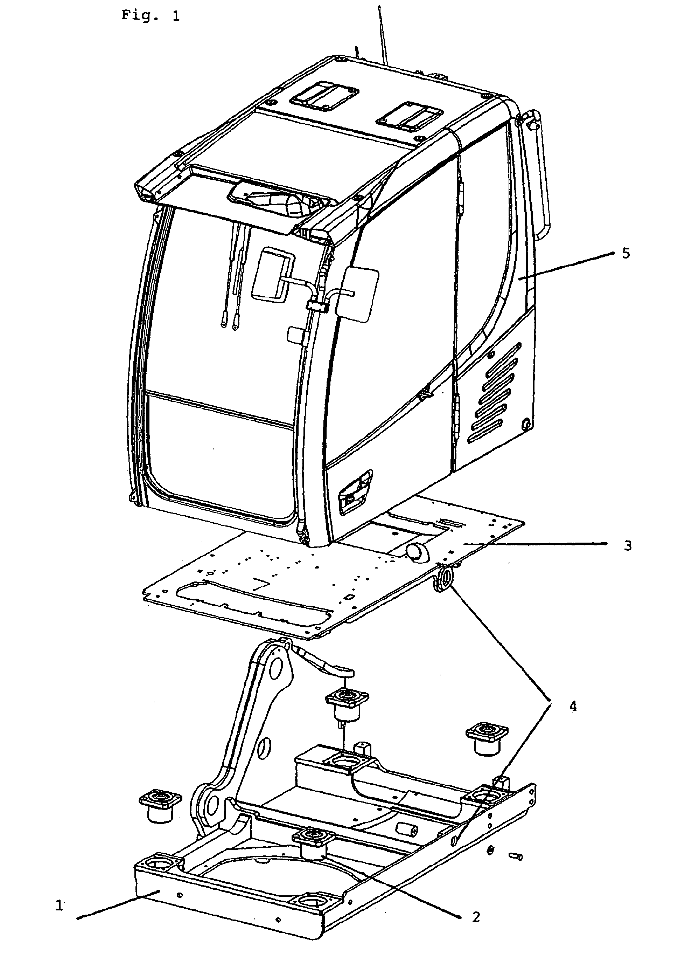

Figur 1 zeigt eine perspektivische Ansicht des erfindungsgemäßen ROPS-Systems, welches ein integriertes Gesamtsystem zum Schutz des Maschinenführers bei einem Unfall darstellt. Es besteht dabei aus einem maschinenseitigen Fahrerstandsrahmen 1, auf welchem über Dämpfungselemente 2 die Bodenplatte 3 der Fahrerkabine 5 gelagert ist. Weiterhin sind Kraftübertragungselemente 4 vorgesehen, welche im Falle eines Unfalls eine optimale Kraftübertragung zwischen den betroffenen Bauteilen ermöglichen. Der Überrollschutz ist dabei in die Fahrerkabine 5 integriert und wird von der Kabinenstruktur im Zusammenspiel mit Bodenplatte und Fahrerstandsrahmen gewährleistet.

Die Bauteile sind dabei so konzipiert und angeordnet, dass im normalen Einsatz die Dämpfung gegen Schwingungen durch die Dämpfungselemente 2 erfolgt, im Falle einer unvorhergesehenen Situation wie z. B. einem Unfall jedoch das komplette System zur Wirkung kommt. Dabei ist sichergestellt, dass der nach ISO 10262-2 definierte Überlebensraum für den Maschinenbediener erhalten bleibt und dennoch die maximal mögliche Verformung der am Sicherheitssystem beteiligten Komponenten genutzt wird, um ausreichend Energie vernichten zu können.

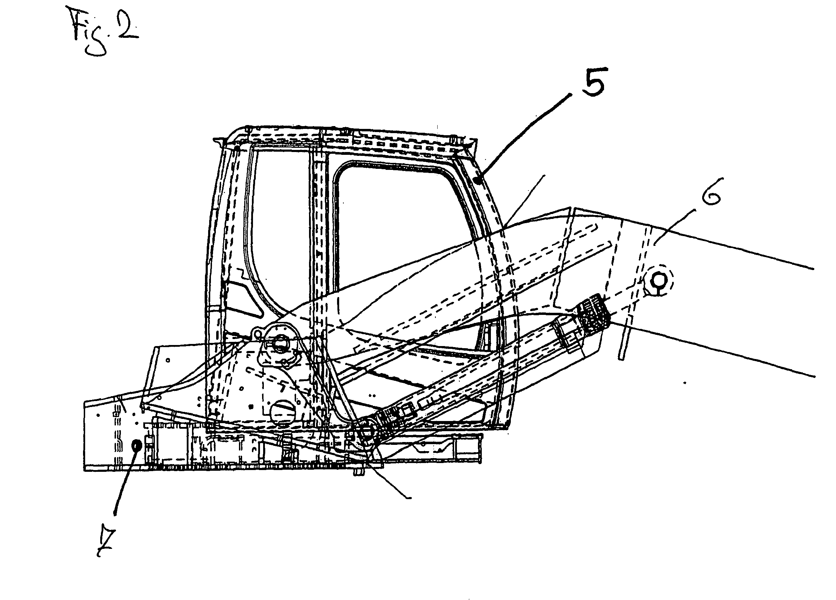

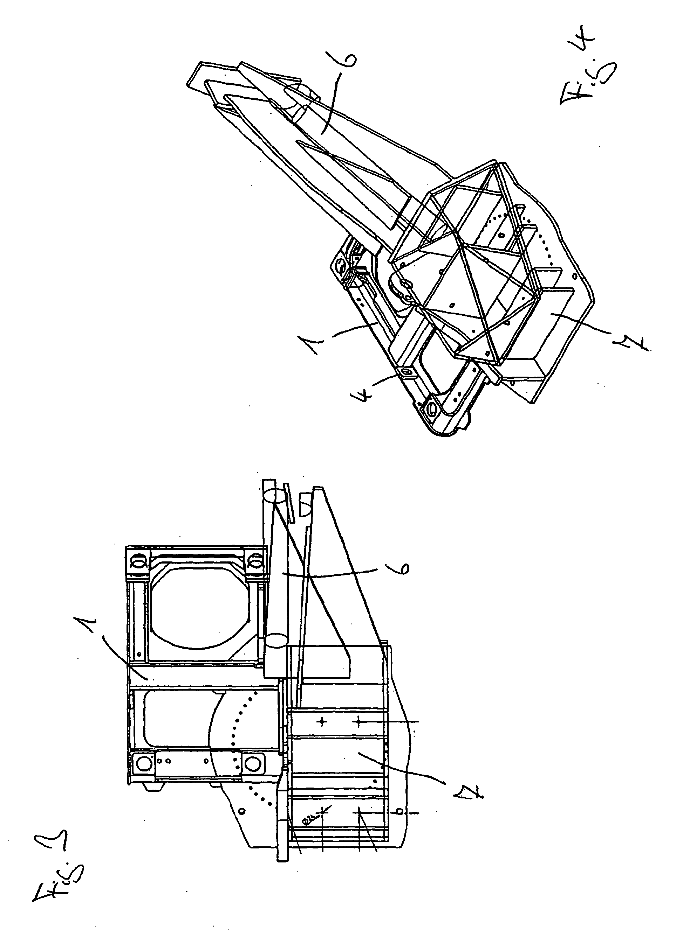

Figuren 2 bis 4 zeigen dabei die Anordnung von Fahrerkabine 5 bzw. des Fahrerstandsrahmens 1 am Oberwagen 7 der erfindungsgemäßen Baumaschine, wobei es sich bei dem Ausführungsbeispiel um einen Hydraulikbagger handelt. Neben der Fahrerkabine 5 bzw. dem Fahrerstandsrahmen 1 ist dabei der Ausleger 6 am Oberwagen 7 angelenkt. Hierbei ist die Anordnung des Fahrerstandsrahmens 1 so gewählt, dass der Abstand zwischen der Fahrerkabine 5 und der rechts daneben liegenden Ausrüstung 6 bzw. dem Oberwagen 7 so auf die Steifigkeit von Fahrerkabine 5 und Fahrerstandsrahmen 1 abgestimmt ist, dass zunächst ein Maximum an Energie in den Rahmen eingeleitet wird, ohne die Kabine nennenswert zu verformen. Hierdurch wird sichergestellt, dass der Überlebensraum für den Bediener beim Überschlag möglichst lang erhalten bleibt und dennoch ausreichend Energie zum Schutz des Maschinenbedieners vernichtet werden kann.

Insbesondere ist die Kabinenstruktur dabei so ausgelegt, dass ihre Steifigkeit bei seitlicher Belastung höher ist als die des Fahrerstandsrahmens in Verbindung mit der Bodenplatte und den elastischen Lagern, so dass der Fahrerstandsrahmen 1, die Bodenplatte 3 und die elastischen Lager 2 optimal an der Energieaufnahme beteiligt sind. So beginnt sich die Kabinenstruktur erst dann nennenswert zu verformen, wenn keine Energieaufnahme durch den Fahrerstandsrahmen 1, die Bodenplatte 3 oder die elastischen Lager 2 mehr möglich ist. Dies ist der Fall, wenn die Kabinenstruktur am Ausleger 6 der Maschine und/oder am Stahlbau des Oberwagens 7 zur Anlage kommt. Infolge dessen konzentriert sich die Energieaufnahme in der Struktur der Fahrerkabine, die wiederum so ausgelegt ist, dass die Verformung so gering wie möglich ist, um ausreichend Schutz für den Fahrer zu gewährleisten, wenn die Maschine nach einem Überschlag auf dem Dach liegen bleibt. Insbesondere ist die Kabinenstruktur dabei so ausgelegt, dass der Überlebensraum für den Fahrer nach einem Überschlag der Maschine auch dann erhalten bleibt, wenn die Maschine auf dem Dach liegen bleibt.

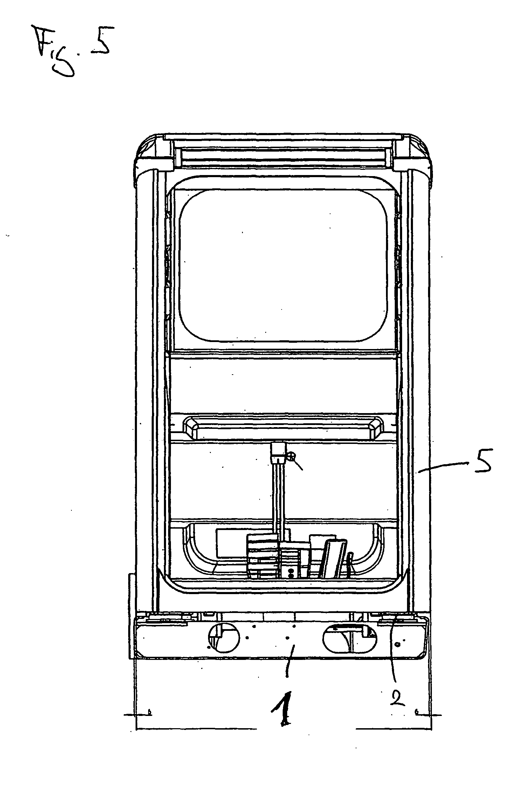

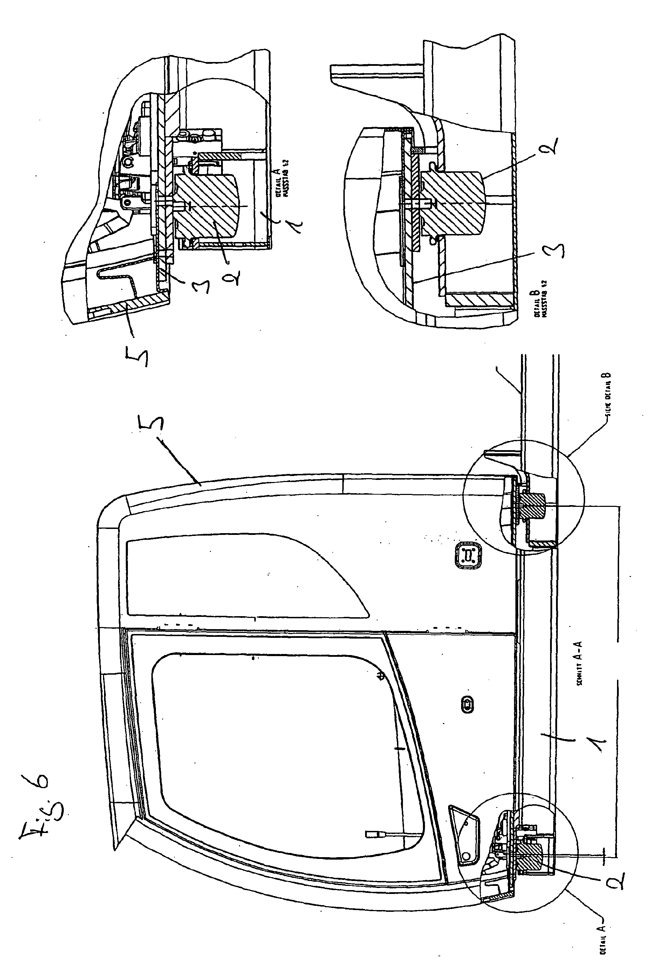

In Figuren 5 und 6 ist die Fahrerkabine 5 detaillierter gezeigt. Die Kabinenstruktur umfaßt dabei einen Rahmen aus vorderen und hinteren Säulen sowie Deckenelementen, wobei die Steifigkeit im hinteren Bereich so groß gewählt ist, dass der vordere Bereich durch relativ schlanke Bauteile gute Sichtverhältnisse gewährleistet.

Dabei sind die der Baumaschine zugewandten Säulen der Kabinenstruktur so ausgelegt, dass bei einem Kontakt mit der Ausrüstung bzw. dem Oberwagen der Baumaschine ein Steifigkeitssprung auftritt. Hierdurch kann durch die Verformung dieser Säulen der Kabinenstruktur weiterhin Energie vernichtet werden, wenn keine Energieaufnahme über durch den Fahrerstandsrahmen mehr erfolgen kann.

Wie insbesondere in den vergrößerten Ausschnitten in Figur 6 dargestellt, ist die Bodenplatte 3 über Dämpfungselemente 2 am Fahrerstandsrahmen 1 gelagert. Die elastischen Lager weisen dabei eine integrierte Ausreißsicherung auf, wobei die Ausreißkräfte höher liegen als die systembedingten Maximalkräfte.

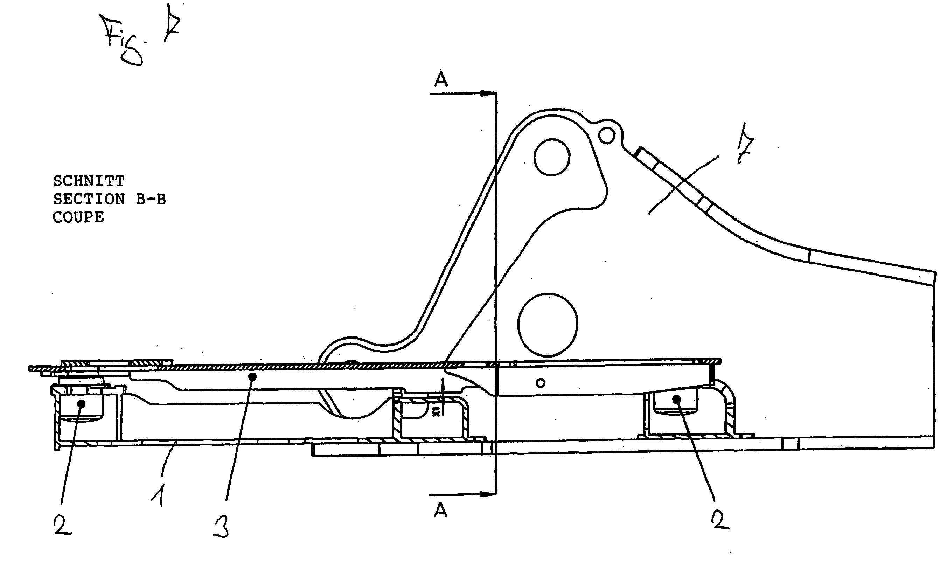

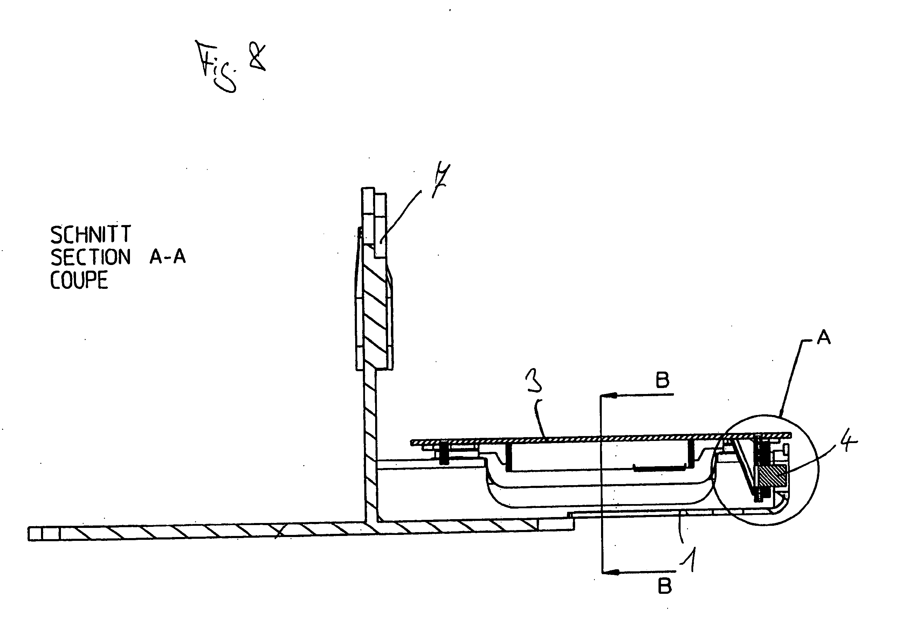

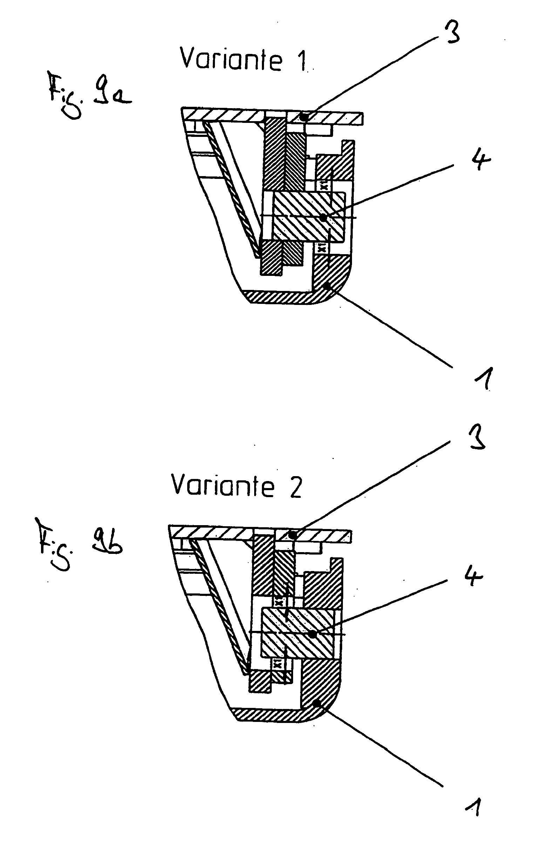

Figuren 7 und 8 zeigen noch einmal das Sicherheitssystem aus Fahrerstandsrahmen 1 und Bodenplatte 3, welche durch die Dämpfungselemente 2 miteinander verbunden sind. Wie insbesondere in Figur 8 sowie der vergrößerten Darstellung in Figur 9a zu erkennen ist, weisen Bodenplatte 3 und Fahrerstandsrahmen 1 dabei Kraftübertragungselemente 4 auf. Die Kraftübertragungselemente 4 dienen als Mitnehmer für den Fahrerstandsrahmen, nachdem der elastische Verformungsweg insbesondere des hinteren linken Lagers aufgebraucht ist. Dabei ist die Kabinenstruktur so ausgelegt, dass die bis zur maximalen Verformung des hinteren linken Lagers und damit der kraftschlüssigen Verbindung zwischen den Kraftübertragungselementen 4 eingeleitete Energie noch nicht zu einer nennenswerten Verformung der Kabinenstruktur führt. Die Verformung der Kabinenstruktur tritt erst ein, wenn eine Grenzbelastung des hinteren linken Lagers erreicht wird und damit die maximal mögliche Energie von den Dämpfungselementen 2 aufgenommen wurde.

Die Kraftübertragungselemente 4 sind dabei als starre Bauelemente ausgeführt, welche im Normalbetrieb einen vertikalen Abstand X1 voneinander aufweisen und damit die freie vertikale Beweglichkeit zwischen Bodenplatte 3 und Fahrerstandsrahmen 1 im Normalbetrieb gewährleisten. Im Falle eines Unfalls geraten die Kraftübertragungselemente 4 dagegen miteinander in Kontakt und ermöglichen es so, Kräfte und Momente von der Fahrerkabine 5 auf den fahrzeugseitigen Fahrerstandsrahmen 1 zu übertragen. Hierdurch wird ein optimaler Kraftfluss in den betroffenen Bauteilen ermöglicht. Die Kraftübertragungselemente 4 umfassen dabei einen Stift, welcher mit einem gewissen vertikalen Abstand in eine längliche Öffnung eingreift.

In der in Figur 9a gezeigten Variante ist dabei der Stift an der Bodenplatte 3, die Öffnung dagegen am Fahrerstandsrahmen 1 angeordnet. Die in Figur 9b gezeigte zweite Variante zeigt dagegen die umgekehrte Anordnung, bei welcher der Stift am Fahrerstandsrahmen 1, die Öffnung an der Bodenplatte 3 angeordnet ist.

Der Stift erstreckt sich dabei entlang einer horizontalen Achse, so dass sich ein vertikaler Abstand zwischen der Außenfläche der Stiftes und der Öffnung ergibt. Hierdurch ist ein gewisses vertikales Spiel zwischen Fahrerkabine und Fahrerstandsrahmen 1 im Normalbetrieb gegeben, wobei der Abstand zwischen Stift und Öffnung im Zusammenspiel mit der Verformbarkeit der Dämpfungselemente 2 den Punkt definiert, an welchem bei einem Unfall ein Kontakt der Kraftübertragungselemente hergestellt wird und eine direkte Kraftübertragung über die Kraftübertragungselemente erfolgt.

Durch diese abgestufte Kraftaufnahme über die Dämpfungselemente, die Bodenplatte und den Fahrerstandsrahmen und zuletzt die Kabinenstruktur werden alle beteiligten Bauteile der ROPS-Struktur so belastet, dass ein wirtschaftliches Gesamtsystem möglich wird, mit welchem der Fahrer dennoch optimal geschützt werden kann.

## Patentansprüche

1. Baumaschine mit einer Fahrerkabine (5), deren verstärkt ausgeführte Kabinenstruktur dem Schutz des Fahrers dient, wobei die Fahrerkabine (5) über eine Bodenplatte (3) an einem maschinenseitigen Fahrerstandsrahmen (1) gelagert ist,
**dadurch gekennzeichnet,**
**dass** die Steifigkeit der Kabinenstruktur zumindest bezüglich eines seitlichen Kraftangriffs größer ist als die der Bodenplatte (3) und/oder des Fahrerstandsrahmens (1), so dass sich bei einem Lastfall zunächst die Bodenplatte (3) und/oder der Fahrerstandsrahmen (3) verformen, wobei der Fahrerstandsrahmen (1) und die Kabinenstruktur oder Bodenplatte (3) Kraftübertragungselemente (4) aufweisen, welche im Normalfall nicht in Kontakt stehen und im Lastfall in Kontakt kommen, um Kraft von der Kabinenstruktur auf den Fahrerstandsrahmen (1) zu übertragen.

2. Baumaschine nach Anspruch 1, wobei sich die Kabinenstruktur bei einem seitlichen Kraftangriff erst dann nennenswert verformt, wenn die Fahrerkabine (5) am Ausleger (6) und/oder am Oberwagen (7) der Baumaschine anliegt.

3. Baumaschine nach Anspruch 1, wobei die der Baumaschine zugewandte Seite der Kabinenstruktur so ausgelegt ist, dass bei einem Kontakt mit der Ausrüstung und/oder dem Oberwagen (7) der Baumaschine ein Steifigkeitssprung auftritt.

4. Baumaschine nach Anspruch 1, wobei die Kraftübertragungselemente (4) an der der Baumaschine abgewandten Seite des Fahrerstandrahmens (1) und der Kabinenstruktur oder Grundplatte angeordnet sind.

5. Baumaschine nach Anspruch 1, wobei die Kraftübertragungselemente (4) aus einem starren Stift bestehen, welcher in eine starre Öffnung eingreift.

6. Baumaschine nach Anspruch 1, wobei die Bodenplatte (3) über Dämpfungselemente (2) am Fahrerstandsrahmen (1) gelagert ist.

7. Baumaschine nach Anspruch 6, wobei die Dämpfungselemente (2) Ausreißsicherungen aufweisen.

8. Baumaschine nach Anspruch 3 und 6, wobei die Kraftübertragungselemente (4) im Lastfall erst in Kontakt kommen, wenn der Verformungsweg mindestens eines Dämpfungselements aufgebraucht ist.

9. Baumaschine nach Anspruch 6, wobei die Steifigkeit der Kabinenstruktur zumindest bezüglich eines seitlichen Kraftangriffs so ausgelegt ist, dass eine nennenswerte Verformung der Kabinenstruktur erst auftritt, wenn der Verformungsweg mindestens eines Dämpfungselements (2) aufgebraucht ist.

10. Baumaschine nach einem der vorangegangenen Ansprüche, wobei die Steifigkeit im hinteren Bereich der Kabinenstruktur höher ist als im vorderen Bereich.

11. Baumaschine nach einem der vorangegangenen Ansprüche, wobei die Steifigkeit der Kabinenstruktur über ein extern angefügtes Versteifungselement erhöht wird.

12. Baumaschine nach Anspruch 11, wobei das Versteifungselement am hinteren Bereich der Kabinenstruktur angeordnet ist.

## Claims

1. Construction machine with a driver's cab (5), the reinforced cab structure of which serves to protect the driver, wherein the driver's cab (5) is mounted on a machine-side driver's-cab frame (1) via a base plate (3), **characterized in that** the strength of the cab structure, at least in relation to a lateral application of force, is greater than that of the base plate (3) and/or of the driver's-cab frame (1), and therefore, in a loading situation, the base plate (3) and/or of the driver's-cab frame (1) deform first, wherein the driver's-cab frame (1) and the cab structure or base plate (3) have force-transmission elements (4) which, in a normal situation, are not in contact and, in a loading situation, come into contact in order to transmit force from the cab structure to the driver' s-cab frame (1).

2. Construction machine according to Claim 1, wherein, in the case of a lateral application of force, the cab structure deforms to a significant extent only when the driver's cab (5) butts against the jib (6) and/or against the superstructure (7) of the construction machine.

3. Construction machine according to Claim 1, wherein that side of the cab structure which is directed towards the construction machine is designed such that a sudden increase in strength occurs in the event of contact with the equipment and/or the superstructure (7) of the construction machine.

4. Construction machine according to Claim 1, wherein the force-transmission elements (4) are arranged on that side of the driver' s-cab frame (1), and of the cab structure or base plate, which is directed away from the construction machine.

5. Construction machine according to Claim 1, wherein the force-transmission elements (4) comprise a rigid pin which engages in a rigid opening.

6. Construction machine according to Claim 1, wherein the base plate (3) is mounted on the driver's-cab frame (1) via damping elements (2).

7. Construction machine according to Claim 6, wherein the damping elements (2) have means for preventing them from being ripped out.

8. Construction machine according to Claims 3 and 6, wherein, in a loading situation, the force-transmission elements (4) come into contact only when the deformation extent of at least one damping element has been used up.

9. Construction machine according to Claim 6, wherein the strength of the cab structure, at least in relation to a lateral application of force, is designed such that significant deformation of the cab structure takes place only when the deformation extent of at least one damping element (2) has been used up.

10. Construction machine according to one of the preceding claims, wherein the strength in the rear region of the cab structure is higher than in the front region.

11. Construction machine according to one of the preceding claims, wherein the strength of the cab structure is increased by means of an externally added strengthening element.

12. Construction machine according to Claim 11, wherein the strengthening element is arranged on the rear region of the cab structure.

## Revendications

1. Engin de chantier comprenant une cabine de conduite (5), dont la structure de cabine conçue de façon forcée sert à la protection du conducteur, la cabine de conduite (5) étant montée au moyen d'une plaque de base (3) sur un châssis de poste de conduite (1) côté machine,
**caractérisé en ce que**
la rigidité de la structure de cabine au moins en ce qui concerne une application de force latérale est plus grande que celle de la plaque de base (3) et/ou du châssis du poste de conduite (1), de sorte que, dans un cas de charge, la plaque de base (3) et/ou le châssis du poste de conduite (3) se déforment d'abord, le châssis du poste de conduite (1) et la structure de cabine ou la plaque de base (3) présentant des éléments de transmission de force (4), lesquels ne sont pas en contact en cas normal et viennent en contact en cas de charge, afin de transmettre de la force de la structure de cabine au châssis du poste de conduite (1).

2. Engin de chantier selon la revendication 1, la structure de cabine se déformant de façon notable lors d'une application de force latérale, dans le cas où la cabine de conduite (5) s'applique sur la flèche (6) et/ou sur le chariot supérieur (7) de l'engin de chantier.

3. Engin de chantier selon la revendication 1, le côté, tourné vers l'engin de chantier, de la structure de cabine étant conçu de telle sorte qu'un écart de rigidité apparaît dans le cas d'un contact avec l'équipement et/ou le chariot supérieur (7) de l'engin de chantier.

4. Engin de chantier selon la revendication 1, les éléments de transmission de force (4) étant disposés sur le côté, opposé à l'engin de chantier, du châssis du poste de conduite (1) et sur la structure de cabine ou la plaque de base.

5. Engin de chantier selon la revendication 1, les éléments de transmission de force (4) étant constitués d'une broche rigide, laquelle s'engage dans une ouverture rigide.

6. Engin de chantier selon la revendication 1, la plaque de base (3) étant montée au moyen d'éléments d'amortissement (2) sur le châssis du poste de conduite (1).

7. Engin de chantier selon la revendication 6, les éléments d'amortissement (2) présentant des sécurités anti-arrachement.

8. Engin de chantier selon les revendications 3 et 6, les éléments de transmission de force (4) ne venant en contact en cas de charge que lorsque la course de déformation d'au moins un élément d'amortissement est épuisée.

9. Engin de chantier selon la revendication 6, la rigidité de la structure de cabine étant conçue au moins en ce qui concerne une application de force latérale de telle sorte qu'une déformation notable de la structure de cabine n'apparaît que lorsque la course de déformation d'au moins un élément d'amortissement (2) est épuisée.

10. Engin de chantier selon l'une quelconque des revendications précédentes, la rigidité dans la zone arrière de la structure de cabine étant plus élevée que dans la zone avant.

11. Engin de chantier selon l'une quelconque des revendications précédentes, la rigidité de la structure de cabine étant augmentée au moyen d'un élément de renfort ajouté de façon externe.

12. Engin de chantier selon la revendication 11, l'élément de renfort étant disposé sur la zone arrière de la structure de cabine.
